# EUROPÄISCHE PATENTSCHRIFT

(11) **EP 2 198 757 B1**
(45) Veröffentlichungstag und Bekanntmachung des Hinweises auf die Patenterteilung: **27.05.2015**
(21) Anmeldenummer: 08022037.9
(22) Anmeldetag: 18.12.2008
(51) Int. Cl.: A47J 36/06

(54) **Kochgeschirrdeckel mit Zarge**
Crockery lid with frame
Couvercle d'ustensile de cuisson doté d'un châssis

(43) Veröffentlichungstag der Anmeldung: 23.06.2010
(73) Patentinhaber: Silit-Werke GmbH & Co. KG, 88499 Riedlingen (DE)
(72) Erfinder: Schobloch, Jochen, 88422 Bad Buchau (DE); Roth, Klaus, 88527 Unlingen (DE); Fingerle, Hans, 88499 Riedlingen (DE)
(74) Vertreter: Grünecker Patent- und Rechtsanwälte PartG mbB

(56) Entgegenhaltungen:
- EP-A- 1 468 933
- DE-U1- 29 513 989
- US-A1- 2003 116 572
- US-A1- 2007 221 651

## Beschreibung

Die Erfindung betrifft einen Kochgeschirrdeckel mit einen Deckelgrundkörper und einer umlaufende Zarge, sowie ein Verfahren zu dessen Herstellung.

Deckel für Kochgeschirre sind in vielfältigen Ausführungsformen bekannt. Unter anderem sind Deckel bekannt, die mit einer umlaufenden Zarge gefasst sind. Unter dem Begriff Zarge sollen hier solche "Einfassungen" verstanden werden, die nicht nur eine reine Dicht- oder Schutzfunktion ausüben, wie z. B. bei einer Dichtung oder einem Kantenschutzring im engeren Sinne, sondern solche die darüber hinaus eine Auflagefläche zur Auflage auf dem zugehörigen Behälter und/oder zur Ablage bzw. Aufbewahrung umfassen. Es ist bereits bekannt, derartige Zargen aus Gründen der Ästhetik und zugunsten einer möglichst freien Formgebung, aber auch wegen günstiger Abdicht- und Anpassungseigenschaften aus Kunststoff zu fertigen.

So ist z.B. aus der DE 8209965 U ein Kochtopfdeckel aus Metall mit einem Kantenschutzring aus einem Elastomer mit einer nach unten ragenden Zarge bekannt. Der Kantenschutzring wird durch Klippbefestigung mit dem Deckel verbunden. Alternativ kann der Metalldeckel in einer Kunststoffspritz- oder -pressmaschine mit dem Kantenschutzring versehen werden. Dieser Deckel hat jedoch den Nachteil, dass die Verbindung zwischen dem Deckelgrundkörper und dem Kantenschutzring bzw. der Zarge nicht in jedem Fall wasserdicht ist. Ein solcher Deckel lässt sich unter Umständen nicht zufriedenstellend reinigen und kann daher Schmutznester beherbergen. Außerdem ist man bei der Materialauswahl und bei der Formgebung der Zarge bzw. des Kantenschutzrings je nach Befestigungsvariante eingeschränkt.

Die US 2003/116572 A1 beschreibt einen Kochgeschirrdeckel mit einer um einen Deckelgrundkörper umlaufenden Dichtung, die in einer umlaufenden Nut des Deckelgrundkörpers eingepasst ist und mit diesem verklebt ist.

Die US 2007/221651 A1 beschreibt einen Kochgeschirrdeckel mit einer den Deckelrand umschließenden Dichtung oder mit einem Dichtelement mit rundem oder ovalem Querschnitt, das auf der Unterseite des Deckelrands aufgeklebt sein kann.

Der Erfindung liegt somit die Aufgabe zugrunde, einen Kochgeschirrdeckel bereitzustellen, der hinsichtlich Herstellung und Funktion verbessert ist.

Diese Aufgabe wird erfindungsgemäß durch einen Kochgeschirrdeckel gelöst, bei dem der Deckelgrundkörper durch eine Vergussmasse mit der Zarge verbunden ist.

Dadurch ist es möglich, Form und Material der Zarge an gestalterische und technische Anforderungen vielfältig anzupassen. Gleichzeitig ermöglicht die Vergussmasse eine dauerhaft stabile und wasserdichte Verbindung.

Außerdem hat die Oberfläche der Vergussmasse die Form eines konkaven Meniskus. Dies ermöglicht einen optisch besonders ansprechenden Übergang zwischen dem Deckelgrundkörper und der Zarge und ist unter hygienischen Gesichtspunkten vorteilhaft.

Günstigerweise ist die Kontur der Vergussmasse im Wesentlichen an die Konturen des Deckelgrundkörpers (2) und der Zarge (3) angepasst. Dadurch wird eine besonders gute Dichtwirkung der Verbindung erzielt.

In einer besonders vorteilhaften Ausführungsform sind der Deckelgrundkörper und die Zarge mit einer wasserdichten Vergussmasse verbunden. Dies ermöglicht eine besonders einfache und gründliche Reinigung des Deckels.

Vorzugsweise umfasst die Zarge eine um die Vergussmasse umlaufend angeordnete Auflagefläche zur Auflage auf ein Kochgeschirr, wobei die ausgehärtete Vergussmasse so hart ist, dass sie sich beim Aufsetzen des Deckels auf das Kochgeschirr im Wesentlichen nicht verformt. Dies ermöglicht einen stabilen und gleichzeitig flachen, und somit optisch ansprechenden Deckelrand.

Günstigerweise ist der Deckelgrundkörper transparent, insbesondere aus Glas. Dies ermöglicht eine visuelle Kontrolle während der Speisenzubereitung.

Vorzugsweise besteht die Vergussmasse aus einem für Lebensmittel unbedenklichen Material. In diesem Fall kann die Vergussmasse auf der Deckelinnenseite teilweise frei liegen.

Vorzugsweise besteht die Zarge aus einem für Lebensmittel unbedenklichen Material, insbesondere aus Kunststoff, Harz oder einem anderen härtenden Material. Dies erübrigt eine zusätzliche Beschichtung für den Einsatz im Küchenbereich.

Bei einer bevorzugten Ausgestaltung umfasst die Zarge ein Silikonmaterial. In diesem Fall werden Geräusche beim Aufsetzten des Deckels auf einen Topf oder eine feste Unterlage gedämpft. Aufgrund der thermischen Eigenschaften von Silikon kann der Deckel an der Zarge im heißen Zustand angefasst werden, ohne dabei Verbrennungen hervorzurufen.

Bei einer bevorzugten Ausgestaltung ist an der Zarge oder an dem Deckelgrundkörper eine Dichtkante ausgebildet, die während des Einbringens der Vergussmasse zwischen die Zarge und den Deckelgrundkörper als Fließbarriere für die Vergussmasse wirkt. Dadurch kann ein Bereich zwischen der Zarge und dem Deckelgrundkörper kontrolliert mit Vergussmasse gefüllt werden und ein unkontrolliertes Eindringen bzw. Austreten von Vergussmasse verhindert werden.

Vorzugsweise ist in der Zarge ein Aufnahmebereich für einen umfänglichen Randabschnitt des Deckelgrundkörpers ausgebildet, wobei das Volumen des Aufnahmebereichs größer ist als das Volumen des Randabschnitts, und ein im Aufnahmebereich vorgesehener Zwischenraum zwischen dem Deckelgrundkörper und der Zarge ist mit der Vergussmasse gefüllt. Dadurch lässt sich eine besonders stabile und dichte Verbindung herstellen.

Günstigerweise ist zwischen der Dichtkante und dem Deckelgrundkörper ein Entlüftungsspalt vorgesehen. Dadurch kann zu verdrängende Luft aus dem Zwischenraum entweichen.

Die Aufgabe wird ebenso gelöst durch ein Verfahren, bei dem ein Deckelgrundkörper und eine Zarge bereitgestellt werden und bei dem der Deckelgrundkörper und die Zarge mit einer Vergussmasse verbunden werden.

Dadurch können Form und Material der Zarge an gestalterische und technische Anforderungen besonders gut angepasst werden. Gleichzeitig ermöglicht die Vergussmasse eine dauerhaft stabile und wasserdichte Verbindung.

Bei einer besonders vorteilhaften Ausgestaltung des Verfahrens wird die Vergussmasse zwischen den Deckelgrundkörper und die Zarge eingebracht, wobei eine in der Zarge ausgebildete Dichtkante in Kombination mit dem Deckelgrundkörper, oder eine an dem Deckelgrundkörper ausgebildete Dichtkante in Kombination mit der Zarge, als Fließbarriere für die Vergussmasse wirkt. Dadurch kann ein Bereich zwischen der Zarge und dem Deckelgrundkörper kontrolliert mit Vergussmasse gefüllt werden.

Vorzugsweise wird die Vergussmasse in einem fließfähigen und/oder kriechfähigen Zustand zwischen Deckelgrundkörper und Zarge eingebracht, wobei sie sich an die Konturen des Deckelgrundkörpers und der Zarge anpasst. Dadurch wird eine besonders gute Dichtwirkung der Verbindung erzielt.

Bevorzugte Ausführungsformen der Erfindung sind in der Zeichnung dargestellt und werden nachstehend erläutert, wobei die Beschreibung der ersten Ausführungsform auch für die weiteren Ausführungsformen zutrifft, sofern nicht anderslautend angegeben. Es zeigen:
- Figur 1: eine schematische Draufsicht auf einen erfindungsgemäßen Deckel;
- Figur 2: eine schematische Teilansicht einer ersten Ausführungsform des erfindungsgemäßen Deckels im Schnitt entlang der Linie A in der Figur 1;
- Figur 3: eine schematische Teilansicht des erfindungsgemäßen Deckels im Schnitt entlang der Linie B in der Figur 2;
- Figur 4: eine schematische Teilansicht einer zweiten Ausführungsform des erfindungsgemäßen Deckels im Schnitt entlang der Linie A in der Figur 1;
- Figur 5: eine schematische Teilansicht einer dritten Ausführungsform des erfindungsgemäßen Deckels im Schnitt entlang der Linie A in der Figur 1.

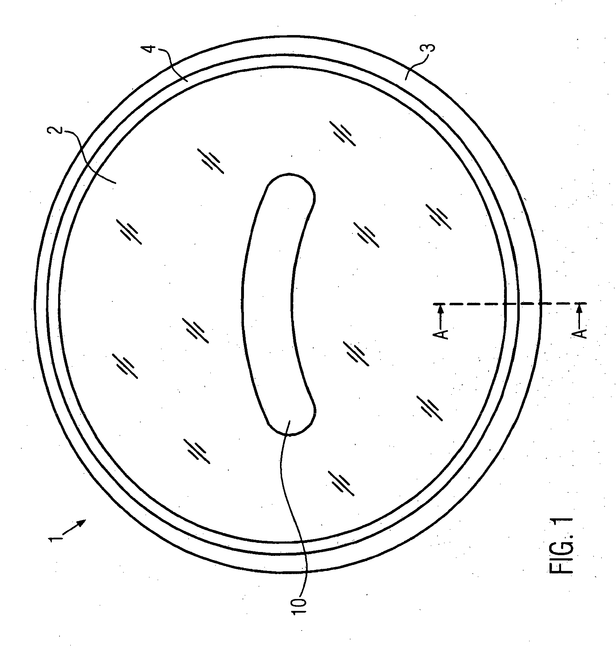

Figur 1 zeigt einen Kochgeschirrdeckel 1 mit einem Deckelgrundkörper 2 aus Glas, einer um dessen Randkantenbereich 2a umlaufenden Zarge 3 und einem Griff 10. Der Deckelgrundkörper 2 ist mittels einer Vergussmasse 4 mit der Zarge 3 verbunden.

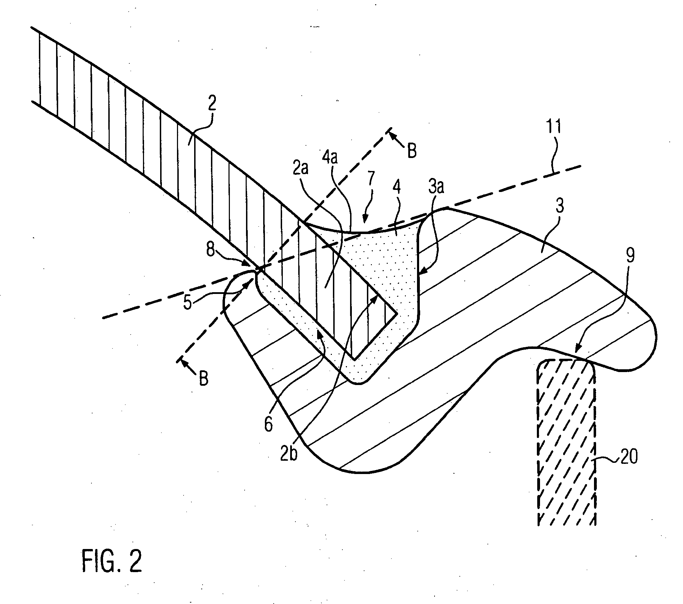

Die Zarge 3 kann als Kunststoffteil, z.B. im Spritzguss, hergestellt sein und weist in einer ersten Ausführungsform gemäß Figur 2 einen Aufnahmebereich 7 für den umfänglichen Randabschnitt 2a und die Vergussmasse 4 auf. Dabei wird der Aufnahmebereich 7 bevorzugt mit deutlichem Übermaß hergestellt, so dass der Zwischenraum 6 zwischen dem Deckelgrundkörper 2 und der Zarge 3 entsteht, der mit der Vergussmasse 4 gefüllt werden kann. Der Querschnitt des Aufnahmebereichs 7 entspricht gemäß Figur 2 näherungsweise dem von der Kontur der Zarge 3 und der Verbindungslinie 11 zwischen den oberen Rändern des Aufnahmebereichs 7 bzw. der Zarge 3 eingeschlossenen Bereich. Somit ist das Volumen des Aufnahmebereichs 7 größer als das Volumen des umfänglichen Randabschnitts 2a.

Der Deckelgrundkörper 2 und die Zarge 3 werden wasserdicht und dauerhaft über die Vergussmasse 4 miteinander verbunden. Beispielhaft sind die Verbindungsflächen 2b und 3a des Deckelgrundkörpers 2 bzw. der Zarge 3 dargestellt. Die Vergussmasse 4 füllt den Aufnahmebereich 7 im Wesentlichen aus, insbesondere aber den Zwischenraum 6. An dem deckelinnenseitigen, den Aufnahmebereich 7 begrenzenden Ende des Zwischenraums 6 ist in der Zarge 3 eine Dichtkante 5 ausgebildet. Diese verhindert, dass bei der Herstellung die noch fließfähige bzw. kriechfähige Vergussmasse 4 aus dem Zwischenraum 6 austritt.

Wie in Figur 2 angedeutet, ist zwischen dem Deckelgrundkörper 2 und der Dichtkante 5 ein kleiner Entlüftungsspalt 8 vorgesehen, der gerade so groß gewählt wird, dass Luft während des Einbringens der Vergussmasse 4 aus dem zu füllenden Zwischenraum 6 entweichen kann.

Auf der Unterseite der Zarge 3 ist eine Auflagefläche 9 zur Auflage auf einem gestrichelt angedeuteten Topf 20 ausgebildet. Die Auflagefläche 9 ist geneigt und ermöglicht dadurch, dass sich der Deckel 1 beim Aufsetzen bzw. Aufdrücken auf den Topf 20 auf diesem selbsttätig zentriert und diesen dicht verschließt. Gegebenenfalls kann der Deckel jedoch auch undicht aufgesetzt werden.

Der Deckel 1 ist Bestandteil eines Kochgeschirrs, wie z. B. eines Kochtopfs, einer Dampfgarers, eines Bräters oder einer Pfanne. Der Deckel 1 muss nicht, wie in Figur 1 dargestellt, rund sein. Denkbar sind auch elliptische Formen oder eckige Formen, insbesondere solche mit abgerundeten Kanten. Der Griff 10 könnte ebenso wie andere (nicht dargestellte) hinlänglich bekannte Anbauteile, wie z. B. Magnete, Membranen und Ventile, sowohl am Deckelgrundkörper 2 als auch an der Zarge 3 vorgesehen sein.

Der Deckelgrundkörper 2 besteht bevorzugt aus einem hitzebeständigen Glas. Ebenso denkbar sind hitzebeständige Kunststoffe, keramische Materialien, Metalllegierungen oder beliebige Kombinationen der genannten Materialien. Für die Anwendung als Kochgeschirr sind transparente, also durchsichtige oder durchscheinende Materialien vorteilhaft, um ein Kochen unter Sichtkontrolle zu ermöglichen. Jedoch ist diese Eigenschaft nicht zwingend erforderlich.

Die Zarge 3 besteht aus einem für Lebensmittel unbedenklichen Material, wie z. B. einem Silikonmaterial oder einem silikonhaltigen Material. Es können jedoch auch andere Kunststoffe aus der Gruppe der Duroplaste, Thermoplaste und Elastomere verwendet werden. Ebenso denkbar wären keramische Materialien oder Metalllegierungen oder Kombinationen aus den genannten Materialien. Das in Figur 2 im Querschnitt dargestellte Profil der Zarge 3 ist nur ein Beispiel einer Querschnittsgestaltung. Die Dichtkante 5 und die Auflagefläche 9 können ebenso davon abweichende Größenverhältnisse und Formen aufweisen. Ebenso kann das Profil der Zarge 3 entlang des Deckelumfangs variieren, z. B. an integrierten Griffen 10 oder Befestigungsstellen für Anbauteile.

Die Dichtkante 5 ist nicht zwingend erforderlich. Bei exakter Dosierung der Vergussmasse 4 kann darauf verzichtet werden. Auch der Entlüftungsspalt 8 ist nicht zwingend erforderlich. Eine sich beim Einbringen der Vergussmasse 4 gegebenenfalls bildende Raupe kann entfernt oder glatt gezogen werden. Die Dichtkante 5 ist jedoch vorteilhaft, da mit ihr die Flächenpressung zwischen Zarge 3 und Deckelgrundkörper 2 erhöht werden kann, so dass das Austreten von Vergussmasse 4 zuverlässig vermieden wird.

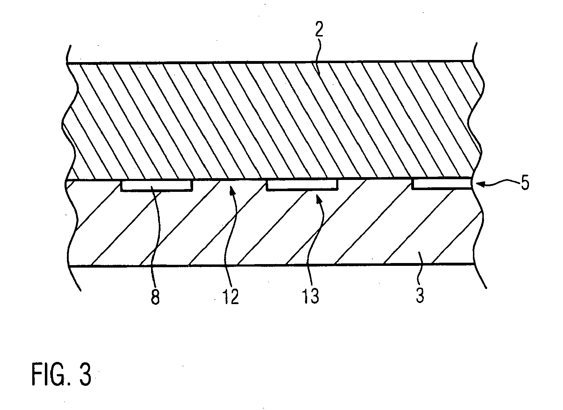

Wie Fig. 3 erkennen lässt, kann die Dichtkante 5 gezahnt ausgebildet sein, so dass sich entlang der Dichtkante 5 Bereiche 12, in denen der Deckelgrundkörper 2 auf der Dichtkante 5 aufliegt, mit Bereichen 13, in denen zwischen der Dichtkante 5 und dem Deckelgrundkörper 2 der Entlüftungsspalt 8 vorgesehen ist, abwechseln. Dadurch lässt sich während des Einbringens der Vergussmasse 4 eine einfache Positionierung des Deckelgrundkörpers 2 auf der Zarge 3 realisieren, ohne die Entlüftung des Zwischenraums 6 zu behindern. Anzahl und Form der Entlüftungsspalte 8 können dabei beliebig variiert werden. Ebenso ist es möglich, in der Zarge 3 keine Entlüftungsspalte 8 vorzusehen oder diese durch geeignete Entlüftungskanäle (nicht dargestellt) in der Zarge 3 zu ersetzen, so dass der Deckel 2 über den gesamten Umfang auf der Zarge 3 aufliegt. Der Anteil der Abschnitte 13 bzw. der Entlüftungsspalte 8 an der Länge bzw. am Umfang der Dichtkante 5 kann somit zwischen 0% (keine Bereiche 13 vorgesehen) und 100% (ein Entlüftungsspalt 8, keine Bereiche 12 vorgesehen) variieren. Er liegt bevorzugt zwischen 1 % und 99% oder gegebenenfalls zwischen 10% und 90%.

Die Vergussmasse 4 besteht bevorzugt aus einem für Lebensmittel unbedenklichen Material. Diese Eigenschaft ist jedoch nur dann obligatorisch, wenn ein Teil der Vergussmasse 4 auf der Innenseite des Deckels 1 frei liegt, z. B. wenn die Dichtkante 5 nicht vorhanden ist, oder falls zu viel Vergussmasse 4 eingebracht wurde. Geeignete Materialien sind z. B. Kunststoff, Silikon und Harz, aber auch andere härtende Substanzen sowie Mischungen aus diesen Stoffen.

Während des Einbringens der Vergussmasse 4 ist diese fließfähig und/oder kriechfähig. Dadurch wird erreicht, dass der Zwischenraum 6 bis zur Dichtkante 5 mit der Vergussmasse 4 gefüllt wird. Dadurch dass sich die Vergussmasse 4 an die Konturen des Deckelgrundkörpers 2 und der Zarge 3 anpasst, wird eine mechanisch stabile und dauerhaft dichte Verbindung erzielt. Bei geeigneter Auswahl und Verarbeitung der Vergussmasse 4 ist die Verbindung nicht nur wasserdicht, sondern auch luftdicht. Dadurch wird das Entweichen von Wasserdampf und das Eindringen von Schmutz zwischen Zarge 3 und Deckelgrundkörper 2 zuverlässig vermieden.

Die Vergussmasse 4 hat an ihrer von außen sichtbaren Oberfläche 4a die Form eines konkaven Meniskus. Dazu müssen die Adhäsionskräfte zwischen der fließfähigen Vergussmasse 4 und dem Randkantenbereich 2a sowie der Zarge 3 größer sein als die Kohäsionskräfte der Vergussmasse 4. Dies kann zum Einen durch Verwendung von Materialien mit geeigneter Oberflächen- bzw. Grenzflächenspannung erreicht werden, zum Anderen durch eine entsprechend an die Materialien angepasste Formgebung des Deckelgrundkörpers 2 und der Zarge 3, insbesondere indem die Neigungen der an die Vergussmasse 4 angrenzenden Flächen 2b und 3a im Bereich der Oberfläche 4a angepasst werden. Für die Ausbildung eines konkaven Meniskus dürfen die Flächen 2b und 3a am Übergang zur Vergussmasse 4, je nach den beteiligten Oberflächen- bzw. Grenzflächenspannungen bzw. den Randwinkeln der Vergussmasse 4, eine Mindestneigung gegenüber der Horizontalen nicht unterschreiten.

Die konkave Meniskusform ergibt einen optisch besonders ansprechenden Übergang zwischen dem Deckelgrundkörper 2 und der Zarge 3 und ist unter hygienischen Gesichtspunkten vorteilhaft.

Wie aus Figur 2 ersichtlich, ist die Vergussmasse 4 bzw. der Aufnahmebereich 7 innerhalb der Auflagefläche 9 angeordnet. Die ausgehärtete Vergussmasse 4 muss daher mindestens so hart sein, dass sie sich weder beim Aufsetzen des Deckels 1 auf eine Unterlage noch durch das Gewicht des Deckels 1 nennenswert verformt, und dass sie den dabei auftretenden Scherkräften widersteht.

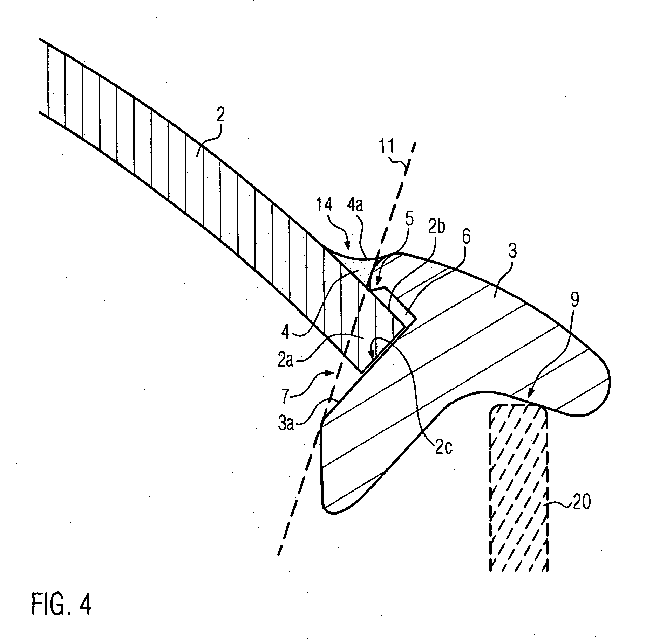

Die in der Figur 4 dargestellte zweite Ausführungsform unterscheidet sich von der ersten Ausführungsform hinsichtlich des Zargenprofils und des Verbindungsbereichs 14 zwischen dem Deckelgrundkörper 2 und der Zarge 3. Demnach ist an der Zarge 3 ebenfalls ein Aufnahmebereich 7 für den Randkantenbereich 2a des Deckelgrundkörpers 2 sowie eine Dichtkante 5 vorgesehen, wobei diese als Fließgrenze für die Vergussmasse 4 in Richtung des Aufnahmebereichs 7 wirkt. Im Aufnahmebereich 7 ist zwischen dem Randkantenbereich 2a und der Zarge 3 ein Zwischenraum 6 vorgesehen.

Die Vergussmasse 4 wird im Wesentlichen außerhalb des Aufnahmebereichs 7 in den Verbindungsbereich 14 zwischen dem Deckelgrundkörper 2 und der Zarge 3 eingebracht, wobei die dazwischen liegende Oberfläche 4a der Vergussmasse 4 die Form eines konkaven Meniskus einnimmt. Die Dichtkante 5 verhindert bei der Herstellung, dass die noch fließfähige bzw. kriechfähige Vergussmasse 4 in den Aufnahmebereich 7 bzw. den Zwischenraum 6 eintritt. Somit bildet die Dichtkante 5 diesbezüglich eine Grenze zwischen dem Aufnahmebereich 7 und dem Verbindungsbereich 14.

Die zweite Ausführungsform wäre alternativ auch ohne die Dichtkante 5 und/oder den Zwischenraum 6 möglich. Die Dichtkante 5 ist jedoch vorteilhaft, da mit ihr die Flächenpressung zwischen der Zarge 3 und dem Deckelgrundkörper 2 erhöht werden kann, so dass das Eindringen der Vergussmasse 4 in den Aufnahmebereich 7 zuverlässig vermieden werden kann. Bei der zweiten Ausführungsform sind an der Dichtkante 5 vorzugsweise keine Entlüftungsspalte 8 bzw. Abschnitte 13 vorgesehen.

Gemäß Figur 4 ist der Zwischenraum 6 nur an einer Fläche des Randkantebereichs 2a ausgebildet, nämlich an der Oberfläche 2b, während die umfängliche Seitenfläche 2c und die Fläche 3a der Zarge 3 formschlüssig verbunden sind. Ein Formschluss zwischen Randkantenbereich 2a und Zarge 3 ist jedoch nicht zwingend notwendig. Ebenso können Form und Lage des Zwischenraums 6 bzw. Lage und Anzahl der Kontaktflächen zwischen Randkantenbereich 2a und Zarge 3 variieren. Bei der ersten und der zweiten Ausführungsform können der Deckelgrundkörper 2 und die Zarge 3 nur durch einen Stoffschluss oder in Kombination mit einem Formschluss miteinander verbunden sein.

Die Vergussmasse 4 bzw. die Dichtkante 5 könnte in entsprechender Weise, entweder zusätzlich oder alternativ, auch an der Unterseite des Deckelgrundkörpers 2 angeordnet werden. Hierfür müssten der Deckelgrundkörper 2 und die Zarge 3 beim Herstellen der Verbindung lediglich um 180° gekippt werden.

Die Zarge 3 besteht bevorzugt aus einem flexiblen Material, wie z. B. einem Silikonmaterial. Dies begünstigt die Dichtwirkung der Dichtkante 5 und ermöglicht die Montage von Zargenprofilen 3, die den Randbereich 2a teilweise umschließen.

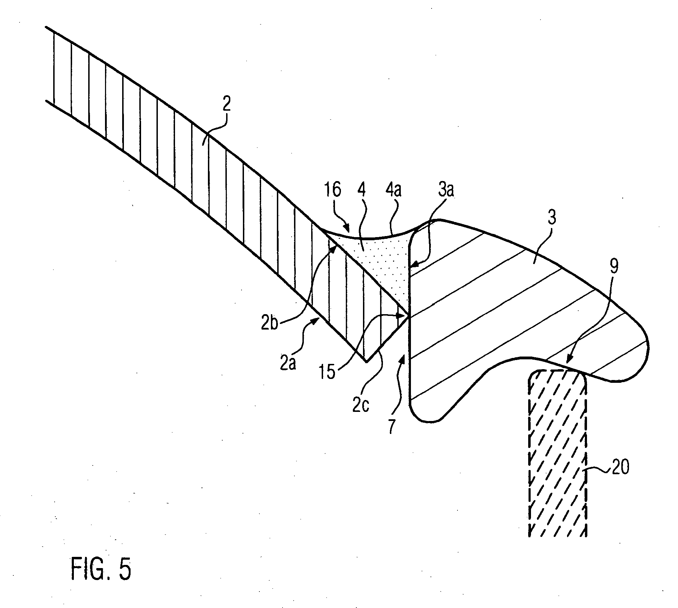

Die in der Figur 5 dargestellte dritte Ausführungsform unterscheidet sich von den vorigen Ausführungsformen dadurch, dass am Randkantenbereich 2a eine umfängliche Dichtkante 15 vorgesehen ist, die im Zusammenwirken mit dem Aufnahmebereich 7 für den Randkantenbereich 2a, der im Beispiel von der nach innen weisenden Zargenfläche 3a gebildet wird, den Verbindungsbereich 16 für die Vergussmasse 4 nach unten hin, in Richtung der Fläche 2c, abdichtet. Im Beispiel wird der Verbindungsbereich 16 von der Oberfläche 2b des Randkantenbereichs 2a und der Fläche 3a oberhalb der Dichtkante 15 eingeschlossen.

Die Flächen 2b und 3a sind so gegen die Horizontale geneigt, dass die Oberfläche 4a der Vergussmasse 4 die Form eines konkaven Meniskus einnimmt. Dadurch wird eine stabile und dichte, sowie optisch ansprechende Verbindung ermöglicht.

Die Vergussmasse 4 kann gegebenenfalls auch mehrere Flächen des Randkantenbereichs 2a und/oder der Zarge 3 miteinander verbinden, z. B. die Flächen 2c und 3a.

Um eine besonders gute Dichtwirkung der Dichtkante 15 durch Erhöhung der Flächenpressung auf den Aufnahmebereich 7 zu gewährleisten, werden der Deckelgrundkörper 2 und die Zarge 3 möglichst mit geringer Toleranz hergestellt, z. B. durch Schleifen des Randkantenbereichs 2a im Bereich der Dichtkante 15 bzw. durch Spritzguss der Zarge 3, wobei letztere bevorzugt aus einem starren oder nur geringfügig flexiblen Material gefertigt wird.

Der Aufnahmebereich 7 ist in Figur als ebene Fläche 3a ausgebildet. In diesem Fall stellt die Vergussmasse 4 im Wesentlichen einen reinen Stoffschluss her. Es sind jedoch auch andere Formen für den Aufnahmebereich 7 denkbar, die in Kombination mit der Dichtkante 15 eine gute Dichtwirkung ergeben, wie z. B. in der Zarge 3 entlang der Dichtkante 15 verlaufende Stufen oder Rillen. In diesem Fall könnte die Verbindung teils formschlüssig sein.

Zugunsten einer mechanisch stabilen, stoffschlüssigen Verbindung von Deckelgrundkörper 2 und Zarge 3 besteht die Vergussmasse 4 insbesondere beim dritten Ausführungsbeispiel bevorzugt aus einem starr aushärtenden Material, so dass sich die Lage des Deckelgrundkörpers 2 und der Zarge 3 zueinander bei normaler Beanspruchung des Deckels 2, wie z. B. beim Aufsetzen des Deckels 1 auf einen Topf 20 im Wesentlichen nicht verändert.

Die Merkmale der beschriebenen Ausführungsformen lassen sich beliebig kombinieren. Beispielsweise könnten auf der Ober- bzw. Unterseite des Deckels 1 unterschiedliche Ausführungsformen realisiert werden.

Ein erfindungsgemäßer Kochgeschirrdeckel gemäß der ersten Ausführungsform lässt sich wie folgt herstellen:

Ein Deckelgrundkörper 2 und eine umlaufende Zarge 3 werden mit Hilfe einer nicht näher beschriebenen Vorrichtung in einer Montageposition gehalten. Anfangs, z.B. nach dem Anmischen der Vergussmasse 4, wird fließfähige bzw. kriechfähige Vergussmasse 4 in den Aufnahmebereich 7 und in den Zwischenraum 6 zwischen dem Deckelgrundkörper 2 und der Zarge 3 eingebracht. Hierbei entweicht Luft durch den Entlüftungsspalt 8 aus dem Zwischenraum 6, so dass die Vergussmasse 4 bis zur Dichtkante 5 vordringt. Da die Dichtkante 5 als Fließbarriere ausgebildet ist, kann die Vergussmasse 4 die Dichtkante 5 im Wesentlichen nicht passieren. Die fließfähige bzw. kriechfähige Vergussmasse 4 passt sich an die Konturen des Deckelgrundkörpers 2 und der Zarge 3 an und bildet nach Aushärtung, z. B. infolge einer chemischen Reaktion, einen zusammen hängenden Verbund, und somit eine wasserdichte Verbindung, die den Deckelgrundkörper 2 und die Zarge 3 nach Verfestigung der Vergussmasse 4 dauerhaft und mechanisch stabil verbindet.

Die Vergussmasse 4 wird so dosiert, dass ihre Oberfläche 4a an in geeigneter Weise geneigte Abschnitte des Deckelgrundkörpers 2 und der Zarge 3 grenzt, so dass sich ihre Oberfläche 4a in Form eines konkaven Meniskus ausbildet.

Je nach Form des Aufnahmebereichs 7 kann es vorteilhaft sein, die Vergussmasse 4 teilweise oder vollständig in den Aufnahmebereich 7 einzubringen, bevor der Deckelgrundkörper 2 und die Zarge 3 in ihre endgültige Montageposition gebracht werden. Dadurch kann gegebenenfalls der Entlüftungsspalt 8 bzw. das Entlüften des Zwischenraums 6 entfallen und/oder die Montage erleichtert werden.

Beim Herstellen der zweiten und dritten Ausführungsform werden der Deckelgrundkörper 2 und die Zarge 3 bevorzugt so zueinander positioniert, dass beim Einbringen der Vergussmasse 4 bereits eine ausreichende Dichtwirkung der Dichtkante 5 bzw. 15 gewährleistet ist.

Bei dem erfindungsgemäßen Kochgeschirrdeckel 1 ist der Deckelgrundkörper 2 und die Zarge 3 nicht durch Aufklipsen oder formschlüssiges Aufstecken, sondern mit der Vergussmasse 4 mechanisch stabil und wasserdicht verbunden, wobei es durch die Verwendung der Vergussmasse 4 möglich ist, Material und Form der Zarge 3 an unterschiedliche ästhetische und technische Anforderungen anzupassen und trotzdem eine dichte, stabile und hygienisch einwandfreie Verbindung zu schaffen.

## Patentansprüche

1. Kochgeschirrdeckel (1) umfassend einen Deckelgrundkörper (2) und
eine umlaufende Zarge (3), wobei der Deckelgrundkörper (2) durch eine Vergussmasse (4) mit der Zarge (3) verbunden ist,
**dadurch gekennzeichnet, dass**
die Oberfläche (4a) der Vergussmasse (4) die Form eines konkaven Meniskus hat.

2. Kochgeschirrdeckel nach Anspruch 1, **dadurch gekennzeichnet, dass** die Kontur der Vergussmasse (4) im Wesentlichen an die Konturen des Deckelgrundkörpers (2) und der Zarge (3) angepasst ist.

3. Kochgeschirrdeckel nach Anspruch 1 oder 2, **dadurch gekennzeichnet, dass** der Deckelgrundkörper (2) und die Zarge (3) mit einer wasserdichten Vergussmasse (4) verbunden sind.

4. Kochgeschirrdeckel nach einem der vorigen Ansprüche, **dadurch gekennzeichnet, dass** die Zarge (3) eine um die Vergussmasse (4) umlaufend angeordnete Auflagefläche (9) zur Auflage auf ein Kochgeschirr (20) umfasst, und dass die ausgehärtete Vergussmasse (4) so hart ist, dass sie sich beim Aufsetzen des Deckels (1) auf das Kochgeschirr (20) im Wesentlichen nicht verformt.

5. Kochgeschirrdeckel nach einem der vorigen Ansprüche, **dadurch gekennzeichnet, dass** der Deckelgrundkörper (2) transparent, und insbesondere aus Glas ist.

6. Kochgeschirrdeckel nach einem der vorigen Ansprüche, **dadurch gekennzeichnet, dass** die Vergussmasse (4) aus einem für Lebensmittel unbedenklichen Material besteht.

7. Kochgeschirrdeckel nach einem der vorigen Ansprüche, **dadurch gekennzeichnet, dass** die Zarge (3) aus einem für Lebensmittel unbedenklichen Material besteht, insbesondere aus Kunststoff, Harz oder einem anderen härtenden Material.

8. Kochgeschirrdeckel nach einem der vorigen Ansprüche, **dadurch gekennzeichnet, dass** die Zarge (3) Silikonmaterial umfasst.

9. Kochgeschirrdeckel nach einem der vorigen Ansprüche, **dadurch gekennzeichnet, dass** in der Zarge (3) oder an dem Deckelgrundkörper (2) eine Dichtkante (5, 15) ausgebildet ist, die während des Einbringens der Vergussmasse (4) zwischen die Zarge (3) und den Deckelgrundkörper (2) als Fließbarriere für die Vergussmasse (4) wirkt.

10. Kochgeschirrdeckel nach einem der vorigen Ansprüche, **dadurch gekennzeichnet, dass** in der Zarge (3) ein Aufnahmebereich (7) für einen umfänglichen Randabschnitt (2a) des Deckelgrundkörpers (2) ausgebildet ist, wobei das Volumen des Aufnahmebereichs (7) größer ist als das Volumen des Randabschnitts (2a), und dass ein im Aufnahmebereich (7) vorgesehener Zwischenraum (6) zwischen dem Deckelgrundkörper (2) und der Zarge (3) mit der Vergussmasse (4) gefüllt ist.

11. Kochgeschirrdeckel nach Anspruch 10, **dadurch gekennzeichnet, dass** zwischen der Dichtkante (5) und dem Deckelgrundkörper (2) ein Entlüftungsspalt (8) vorgesehen ist.

12. Verfahren zur Herstellung eines Kochgeschirrdeckels (1) mit einem Deckelgrundkörper (2) und einer umlaufenden Zarge (3), das die folgenden Schritte umfassend;
- Bereitstellen eines Deckelgrundkörpers (2) und einer Zarge (3);
- Verbinden des Deckelgrundkörpers (2) und der Zarge (3) mittels einer Vergussmasse (4) derart, dass die Oberfläche (4a) der Vergussmasse (4) die Form eines konkaven Meniskus hat.

13. Verfahren nach Anspruch 12, **dadurch gekennzeichnet, dass** die Vergussmasse (4) zwischen den Deckelgrundkörper (2) und die Zarge (3) eingebracht wird, wobei eine an der Zarge (3) ausgebildete Dichtkante (5) in Kombination mit dem Deckelgrundkörper (2), oder eine an dem Deckelgrundkörper (2) ausgebildete Dichtkante (15) in Kombination mit der Zarge (3), als Fließbarriere für die Vergussmasse (4) wirkt.

14. Verfahren nach Anspruch 12 oder 13, **dadurch gekennzeichnet, dass** die Vergussmasse (4) in einem fließfähigen und/oder kriechfähigen Zustand zwischen Deckelgrundkörper (2) und Zarge (3) eingebracht wird und sich dabei an die Konturen des Deckelgrundkörpers (2) und der Zarge (3) anpasst.

## Claims

1. Cookware lid (1), comprising a basic lid body (2) and a surrounding border (3),
wherein the basic lid body (2) is connected to the border (3) by means of a sealing compound (4),
**characterized in that**
the surface (4a) of the sealing compound (4) has the shape of a concave meniscus.

2. Cookware lid according to claim 1, **characterized in that** the contour of the sealing compound (4) is essentially adapted to the contours of the basic lid body (2) and the border (3).

3. Cookware lid according to claim 1 or 2, **characterized in that** the basic lid body (2) and the border (3) are connected with a watertight sealing compound (4).

4. Cookware lid according to one of the preceding claims, **characterized in that** the border (3) comprises a rest surface (9) arranged to surround the sealing compound (4) to rest on a piece of cookware (20), and that the cured sealing compound (4) is hard enough not to be essentially deformed when the lid (1) is placed onto the piece of cookware (20).

5. Cookware lid according to one of the preceding claims, **characterized in that** the basic lid body (2) is transparent, and is in particular made of glass.

6. Cookware lid according to one of the preceding claims, **characterized in that** the sealing compound (4) consists of a material harmless for food.

7. Cookware lid according to one of the preceding claims, **characterized in that** the border (3) consists of a material harmless for food, in particular of plastics, resin or any other curing material.

8. Cookware lid according to one of the preceding claims, **characterized in that** the border (3) comprises silicone material.

9. Cookware lid according to one of the preceding claims, **characterized in that** a sealing edge (5, 15) is embodied in the border (3) or at the basic lid body (2), which acts as a flow barrier for the sealing compound (4) during the introduction of the sealing compound (4) between the border (3) and the basic lid body (2).

10. Cookware lid according to one of the preceding claims, **characterized in that** an accommodation region (7) for a circumferential edge section (2a) of the basic lid body (2) is embodied in the border (3), wherein the volume of the accommodation region (7) is larger than the volume of the edge section (2a), and that a space (6) between the basic lid body (2) and the border (3) provided in the accommodation region (7) is filled with the sealing compound (4).

11. Cookware lid according to claim 10, **characterized in that** a vent gap (8) is provided between the sealing edge (5) and the basic lid body (2).

12. Method for the manufacture of a cookware lid (1) with a basic lid body (2) and a surrounding border (3), comprising the following steps:
- providing a basic lid body (2) and a border (3);
- connecting the basic lid body (2) and the border (3) by means of a sealing compound (4) such that the surface (4a) of the sealing compound (4) has the shape of a concave meniscus.

13. Method according to claim 12, **characterized in that** the sealing compound (4) is introduced between the basic lid body (2) and the border (3), wherein a sealing edge (5) embodied at the border (3) in combination with the basic lid body (2), or a sealing edge (15) embodied at the basic lid body (2) in combination with the border (3), acts as a flow barrier for the sealing compound (4).

14. Method according to claim 12 or 13, **characterized in that** the sealing compound (4) is introduced between the basic lid body (2) and the border (3) in a state where it is capable of flow and/or creep, and in the process adjusts to the contours of the basic lid body (2) and the border (3).

## Revendications

1. Couvercle (1) d'ustensile ou de récipient de cuisson comprenant un corps de base de couvercle (2) et un cadre de bordure (3) périphérique, le corps de base de couvercle (2) étant relié au cadre de bordure (3) par une masse de coulée de liaison (4),
**caractérisé en ce que**
la surface (4a) de la masse de coulée de liaison (4) présente une forme de ménisque concave.

2. Couvercle d'ustensile de cuisson selon la revendication 1, **caractérisé en ce que** le contour de la masse de coulée de liaison (4) est adapté sensiblement aux contours du corps de base de couvercle (2) et du cadre de bordure (3).

3. Couvercle d'ustensile de cuisson selon la revendication 1 ou la revendication 2, **caractérisé en ce que** le corps de base de couvercle (2) et le cadre de bordure (3) sont reliés mutuellement à l'aide d'une masse de coulée de liaison (4) étanche à l'eau.

4. Couvercle d'ustensile de cuisson selon l'une des revendications précédentes, **caractérisé en ce que** le cadre de bordure (3) comprend une surface d'appui (9) agencée de manière périphérique autour de la masse de coulée de liaison (4) et destinée à venir en appui sur un ustensile de cuisson (20), et **en ce que** la masse de coulée de liaison (4) durcie est suffisamment dure pour sensiblement ne pas se déformer lors de l'application du couvercle (1) sur l'ustensile de cuisson (20).

5. Couvercle d'ustensile de cuisson selon l'une des revendications précédentes, **caractérisé en ce que** le corps de base de couvercle (2) est transparent, et est notamment en verre.

6. Couvercle d'ustensile de cuisson selon l'une des revendications précédentes, **caractérisé en ce que** la masse de coulée de liaison (4) est constituée d'un matériau inoffensif et sans danger pour les produits alimentaires et donc compatible avec ceux-ci.

7. Couvercle d'ustensile de cuisson selon l'une des revendications précédentes, **caractérisé en ce que** le cadre de bordure (3) est constitué d'un matériau inoffensif et sans danger pour les produits alimentaires et donc compatible avec ceux-ci, notamment en matière plastique, en résine ou en un autre matériau durcissable.

8. Couvercle d'ustensile de cuisson selon l'une des revendications précédentes, **caractérisé en ce que** le cadre de bordure (3) comporte un matériau de silicone.

9. Couvercle d'ustensile de cuisson selon l'une des revendications précédentes, **caractérisé en ce que** dans le cadre de bordure (3) ou sur le corps de base de couvercle (2) est formée une arête d'étanchéité (5, 15) qui, pendant l'introduction de la masse de coulée de liaison (4) entre le cadre de bordure (3) et le corps de base de couvercle (2), agit en tant que barrière d'écoulement pour la masse de coulée de liaison (4).

10. Couvercle d'ustensile de cuisson selon l'une des revendications précédentes, **caractérisé en ce que** dans le cadre de bordure (3) est formée une zone d'accueil (7) pour un tronçon de bordure périphérique (2a) du corps de base de couvercle (2), le volume de la zone d'accueil (7) étant plus grand que le volume du tronçon de bordure (2a), et **en ce qu'**un espace intermédiaire (6) entre le corps de base de couvercle (2) et le cadre de bordure (3), prévu dans la zone d'accueil (7), est rempli avec la masse de coulée de liaison (4).

11. Couvercle d'ustensile de cuisson selon la revendication 10, **caractérisé en ce qu'**entre l'arête d'étanchéité (5) et le corps de base de couvercle (2) est prévue une fente de purge d'air (8).

12. Procédé de fabrication d'un couvercle (1) d'ustensile de cuisson comportant un corps de base de couvercle (2) et un cadre de bordure (3) périphérique, présentant les étapes suivantes :
- fourniture d'un corps de base de couvercle (2) et d'un cadre de bordure (3),
- assemblage de liaison du corps de base de couvercle (2) et du cadre de bordure (3) à l'aide d'une masse de coulée de liaison (4), de manière à ce que la surface (4a) de la masse de coulée de liaison (4) présente une forme de ménisque concave.

13. Procédé selon la revendication 12, **caractérisé en ce que** la masse de coulée de liaison (4) est introduite entre le corps de base de couvercle (2) et le cadre de bordure (3), une arête d'étanchéité (5) formée sur le cadre de bordure (3), en combinaison avec le corps de base de couvercle (2), ou une arête d'étanchéité (15) formée sur le corps de base de couvercle (2), en combinaison avec le cadre de bordure (3), agissant en tant que barrière d'écoulement pour la masse de coulée de liaison (4).

14. Procédé selon la revendication 12 ou la revendication 13, **caractérisé en ce que** la masse de coulée de liaison (4) est introduite dans un état susceptible de s'écouler et/ou susceptible de migrer entre le corps de base de couvercle (2) et le cadre de bordure (3), en s'adaptant, à cette occasion, aux contours du corps de base de couvercle (2) et du cadre de bordure (3).
